# EUROPEAN PATENT SPECIFICATION

(11) **EP 4 079 624 B1**
(45) Date of publication and mention of the grant of the patent: **04.06.2025**
(21) Application number: 20901956.1
(22) Date of filing: 04.12.2020
(51) Int. Cl.: B63B 25/16, B63B 27/24, B63H 21/38, F17C 9/00

(54) **LIQUEFIED GAS STORAGE TANK AND SHIP INCLUDING SAME**
FLÜSSIGGASTANK UND SCHIFF DAMIT
RÉSERVOIR DE STOCKAGE DE GAZ LIQUÉFIÉ ET NAVIRE LE COMPRENANT

(30) Priority: 18.12.2019 KR 20190169979
(43) Date of publication of application: 26.10.2022
(73) Proprietor: POSCO, Pohang-si, Gyeongsangbuk-do 37859 (KR)
(72) Inventor: SON, Sang-Hun, Seoul 06194 (KR); NOH, Myung-Hyun, Incheon 21985 (KR); KIM, Eung-Soo, Incheon 21985 (KR)
(74) Representative: Meissner Bolte Partnerschaft mbB
(86) International application number: PCT/KR2020/017657
(87) International publication number: WO 2021/125646

(56) References cited:
- EP-B1- 0 715 703
- EP-B1- 2 705 295
- WO-A1-2012/107993
- CN-A- 105 042 328
- DE-A1- 102020 007 617
- DE-U1- 9 313 562
- JP-A- 2008 150 975
- JP-A- 2019 044 733
- KR-A- 20110 129 558
- KR-A- 20140 091 891
- KR-B1- 100 650 606
- KR-U- 19990 031 466
- KR-U- 960 023 295
- KR-U- 960 023 295
- US-B1- 6 234 197

## Description

### [Technical Field]

The present invention relates to a liquefied gas storage tank and a ship having the same.

### [Background Art]

In general, petroleum resources used as transportation fuels for automobiles and ships and as various fuels used domestically and abroad are gradually being depleted, and the amount of liquefied gas used as alternative energy is increasing due to the rise in oil prices, increasingly stringent environmental regulations, and the like.

For example, liquefied gas includes liquefied natural gas (LNG), liquefied petroleum gas (LPG), or the like. Since a volume of liquefied gas is greatly reduced as compared to a gaseous state (for example, a volume of LNG may be reduced to 1/600 when the LNG is liquefied, and LPG may be greatly reduced to 1/250 when the LPG is liquefied), the liquefied gas is convenient for storage and transportation in a liquefied state, but has a difficulty in maintaining temperature below a boiling point (about - 162°C for LNG, and about -50°C for LPG).

In order to store this liquefied gas, a cryogenic liquefied gas storage tank that maintains the liquefied gas below the boiling point is required.

However, the liquefied gas storage tank is a structure for storing liquefied fuel for a transport vehicle such as a ship, and since the liquefied gas storage tank has liquid stored therein, the liquefied gas storage tank may not always be level with a water surface or the ground due to the movement of a floating structure such as a ship or a land transport vehicle, resulting in a flow of liquid fuel occurring.

In addition, as the liquid fuel is consumed, when the level of the liquefied gas fuel inside the liquefied gas storage tank is lowered, and the inclination of the above-described liquefied gas storage tank occurs, there is a problem in which an inlet pipe of the pump unit for supplying the liquefied gas fuel inside the liquefied gas storage tank to the outside is not immersed in the liquefied gas fuel, but is exposed to the space of the liquefied gas storage tank.

Accordingly, gas such as vaporized fuel gas is introduced through the inlet pipe, and accordingly, gas is introduced into components of an engine to which the liquefied gas fuel is to be supplied, which causes a failure, and there is a problem in which the engine system of the transport vehicle needs to be stopped in order to prevent this situation.

As a result, the capacity of the liquefied gas storage tank may not be utilized to the maximum, and there are limitations in that a loss of a travel distance and a time loss due to frequent refueling are caused, and fuel consumption efficiency is reduced due to an increased weight of a transport vehicle such as a ship as liquefied gas fuel in the liquefied gas storage tank needs to always be filled to a certain depth or more.

In addition, when a part of the inlet pipe is not immersed in the liquefied gas fuel, and thus, is exposed to the space of the liquefied gas storage tank, since the part of the inlet pipe is exposed to a relatively high temperature area, even if the liquefied gas fuel is introduced into the inlet pipe, there is a problem in which the liquefied gas may be vaporized during transport and transmitted to the outside of the engine, etc.

Therefore, in order to solve or improve the above-described problems, there is a need to study a liquefied gas storage tank and a ship having the same.

EP2705295B1 discloses a liquefied gas outlet system.

### [Disclosure]

### [Technical Problem]

The present invention provides a liquefied gas storage tank capable of preventing a problem in which an inlet pipe of a pump unit is not immersed in liquefied gas fuel, and thus, is exposed to a space of the liquefied gas storage tank, and a ship having the same.

The present invention provides a liquefied gas storage tank capable of preventing a problem in which an inlet pipe of a pump unit is exposed to a relatively high-temperature space filled with gas in the liquefied gas storage tank, and a ship including the same.

### [Technical Solution]

A liquefied gas storage tank in accordance with independent claim 1. Advantageous aspects of the invention are set out in the dependent claims.

### [Advantageous Effects]

According to a liquefied gas storage tank and a ship having the same of the present invention, it is possible to prevent a problem in which an inlet pipe of a pump unit is not immersed in liquefied gas fuel, and thus, is exposed to a space of the liquefied gas storage tank.

In another aspect, according to a liquefied gas storage tank and a ship having the same of the present invention, it is possible to prevent a problem in which an inlet pipe of a pump unit is exposed to a relatively high-temperature space filled with gas in the liquefied gas storage tank.

As a result, it is possible to prevent a problem in which gas is introduced into a configuration of an engine or the like to which liquefied gas fuel is to be supplied and thus a failure is caused, and an engine unit is stopped while the ship is moving.

In addition, it is possible to utilize the capacity of the liquefied gas storage tank to the maximum to increase a travel distance, prevent a time loss due to frequent refueling, and improve a problem in which fuel consumption efficiency is reduced due to an increased weight of a ship as liquefied gas fuel in the liquefied gas storage tank needs to always be filled to a certain depth or more.

However, various and beneficial advantages and effects of the present invention are not limited to the contents described above, and may be more easily understood in a process of describing exemplary embodiments of the present invention.

### [BRIEF DESCRIPTION OF THE DRAWINGS]

FIG. 1 is a front view illustrating a liquefied gas storage tank of the present invention.
FIG. 2 is a front view illustrating a state in which the liquefied gas storage tank of the present invention is inclined.
FIG. 3 is a front view illustrating an embodiment in which a supply pipe part is connected to an upper side of a tank unit in the liquefied gas storage tank of the present invention.
FIG. 4 is a front view illustrating a state in which the liquefied gas storage tank is inclined in the embodiment in which the supply pipe part of the liquefied gas storage tank of the present invention is connected to the upper side of the tank unit.
FIG. 5 is a front view illustrating a part of an inner box unit in the liquefied gas storage tank of the present invention.
FIG. 6 is a front view illustrating an embodiment in which one first flip door is provided on an upper wall portion of the inner box unit in the liquefied gas storage tank of the present invention.
FIG. 7 is a front view illustrating an embodiment in which a differential pressure pipe is provided in the inner box unit in the liquefied gas storage tank of the present invention.
FIG. 8 is a front view illustrating an embodiment in which a cryogenic unit is provided in the liquefied gas storage tank of the present invention.
FIG. 9 is a front view illustrating an embodiment in which the cryostat unit extends to a lower wall portion in the liquefied gas storage tank of the present invention.
FIG. 10 is a front view illustrating an embodiment in which the cryostat unit extends to the lower wall portion and a side wall portion in the liquefied gas storage tank of the present invention.
FIG. 11 is a side view illustrating the liquefied gas storage tank of the present invention and a ship having the same.

### [Best Mode]

Hereinafter, exemplary embodiments in the present invention will be described with reference to the accompanying drawings. However, exemplary embodiments in the present invention may be modified in several other forms, and the scope of the present invention is not limited to exemplary embodiments to be described below. Rather, these exemplary embodiments are provided so that the present invention will completely describe the present invention to those skilled in the art. In the drawings, shapes, sizes, and the like, of components may be exaggerated for clarity.

In addition, in the present specification, a singular expression includes a plural expression unless the context clearly dictates otherwise, and the same or similar reference numerals refer to the same or corresponding components throughout the specification.

The present invention relates to a liquefied gas storage tank 1 and a ship having the same, in which an inlet pipe 210 of a pump unit 200 is formed to pass through a lower wall portion 340 of an inner box unit 300 and extend to an inside of the inner box unit 300, and thus, may be configured to be immersed in liquefied gas L fuel positioned in the lower wall portion 340 by gravity.

In addition, the inner box unit 300 includes a backflow prevention unit 310 that surrounds the inlet pipe 210 of the pump unit 200 and is provided so that the liquefied gas L is introduced but not discharged, so it is possible to prevent a problem in which the inlet pipe 210 is not immersed in the liquefied gas L fuel, and thus, is exposed to a space of the liquefied gas storage tank 1.

In another aspect, a liquefied gas storage tank 1 and a ship having the same of the present invention include a cryogenic unit 400, so it is possible to prevent a problem in which the inlet pipe 210 is exposed to a relatively high-temperature space filled with the gas of the liquefied gas storage tank 1.

As a result, it is possible to prevent a problem in which a failure is caused due to the introduction of gas into the configuration of the engine or the like to which the liquefied gas L fuel is to be supplied, thereby preventing a problem in which an engine unit 2a is stopped during the movement of the ship, and it is possible to utilize the capacity of the liquefied gas storage tank 1 to the maximum, thereby increasing a travel distance, preventing a time loss due to frequent refueling, and improving a reduction in fuel consumption efficiency due to an increased weight of the ship.

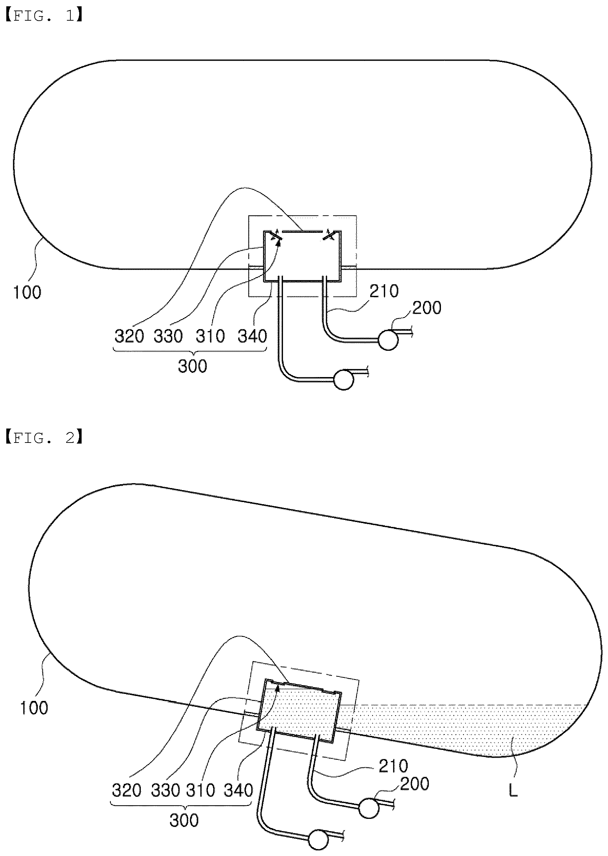

Describing in detail with reference to the drawings, FIG. 1 is a front view illustrating the liquefied gas storage tank 1 of the present invention, and FIG. 2 is a front view illustrating a state in which the liquefied gas storage tank 1 of the present invention is inclined.

That is, as illustrated in FIGS. 1 and 2, the plurality of inlet pipes 210 may be provided, and may be formed to pass through the lower wall portion 340 of the inner box unit 300.

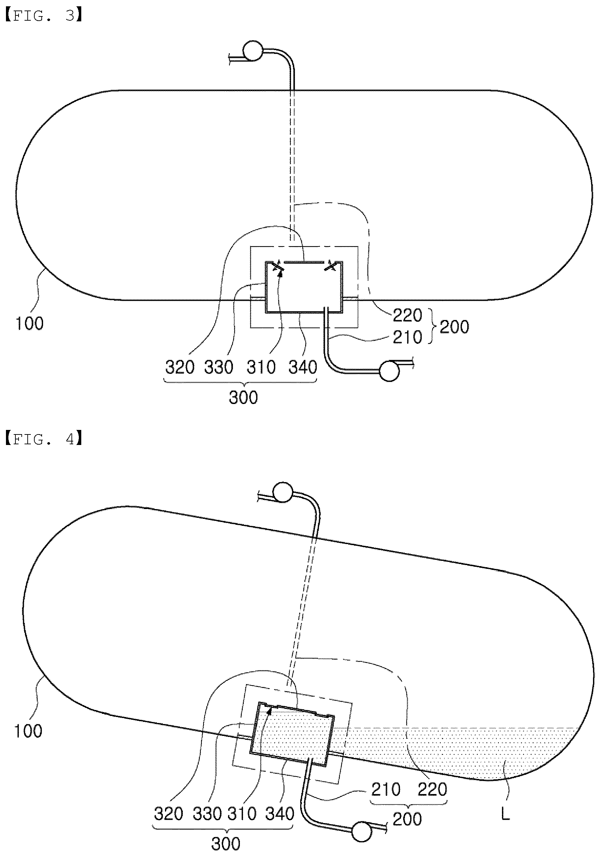

FIG. 3 is a front view illustrating an embodiment in which the supply pipe part 220 is connected to an upper side of the tank unit 100 in the liquefied gas storage tank 1 of the present invention, and FIG. 4 is a front view illustrating a state in which the liquefied gas storage tank 1 of the present invention is inclined in the embodiment in which the supply pipe part 220 of the liquefied gas storage tank 1 of the present invention is connected to the upper side of the tank unit 100.

That is, as illustrated in FIGS. 3 and 4, one inlet pipe 210 is provided, and is formed to pass through the lower wall portion 340 of the inner box unit 300, and the supply pipe part 220 for transmitting the liquefied gas L to the liquefied gas storage tank 1 may be formed to extend from the upper side.

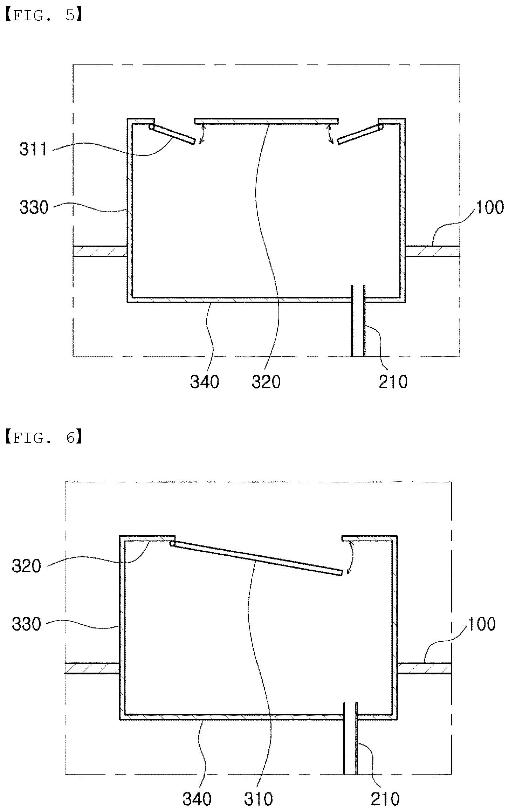

In addition, FIG. 5 is a front view illustrating a portion of the inner box unit 300 in the liquefied gas storage tank 1 of the present invention, and FIG. 6 is a front view illustrating an embodiment in which one first flip door 311 is provided on the upper wall portion 320 of the inner box unit 300 in the liquefied gas storage tank 1 of the present invention.

Referring to FIG. 5, the liquefied gas storage tank 1 according to the embodiment of the present invention may include the tank unit 100 in which the liquefied gas L is stored, the inner box unit 300 that is disposed inside the tank unit 100 and installed at a bottom portion of the tank unit 100, and the pump unit 200 that has the inlet pipe 210 formed to pass through the lower wall portion 340 of the inner box unit 300 and to communicate with the inside of the inner box unit 300, and suctions the liquefied gas L stored in the tank unit through the inlet pipe 210 and supplies the liquefied gas to the outside.

In this way, in the liquefied gas storage tank 1 of the present invention, the inlet pipe 210 of the pump unit 200 is formed to pass through the lower wall portion 340 of the inner box unit 300 and communicate with the inside of the inner box unit 300, so the inlet pipe 210 may be configured to not be exposed to a high-temperature space by being out of the low-temperature liquefied gas L.

In other words, the low-temperature liquefied gas L is pooled in the lower wall portion 340 by gravity. As such, by connecting the inlet pipe 210 to the lower wall portion 340 where the low-temperature liquefied gas L is located, it is possible to prevent the inlet pipe 210 from being exposed to the high-temperature space.

To this end, the inlet pipe 210 may be coupled to the lower wall portion 340 of the inner box unit 300, and may be provided at the same height as the lower wall portion 340. Alternatively, the inlet pipe 210 may be formed to extend into the inner box unit 300 at a predetermined height.

Here, the inner box unit 300 of the liquefied gas storage tank 1 according to the invention is formed to be depressed downwardly from the bottom portion of the tank unit 100.

According to this configuration, since the lower wall portion 340 of the inner box unit 300 is formed at a lower height than the bottom portion of the tank unit 100, the liquefied gas L received in the tank unit 100 may converge to the lower wall portion 340 of the inner box unit 300 located at the lowest height.

In addition, the inner box unit 300 of the liquefied gas storage tank 1 according to the embodiment of the present invention is provided to surround a periphery of the inlet pipe 210.

Here, the inner box unit 300 of the liquefied gas storage tank according to the embodiment of the present invention may include a backflow prevention unit 310 provided so that the liquefied gas L is introduced but not discharged.

In this way, the liquefied gas storage tank 1 of the present invention is provided to surround the periphery of the inlet pipe 210 of the pump unit 200, and has the liquefied gas L accommodated therein in one-way, so, as the liquefied gas L fuel is used inside the tank unit 100, a water level of the liquefied gas L fuel is lowered, or as the liquefied gas storage tank 1 is inclined due to sloshing of a ship or the like, the periphery of the inlet pipe 210 may be filled with the liquefied gas L fuel even if the liquefied gas L fuel is biased to one side.

As a result, it is possible to prevent a problem in which a failure is caused due to the introduction of gas into the configuration of the engine or the like to which the liquefied gas L fuel is to be supplied, thereby preventing a problem in which an engine unit 2a is stopped during the movement of the ship, and it is possible to utilize the capacity of the liquefied gas storage tank 1 to the maximum, thereby increasing a travel distance, preventing a time loss due to frequent refueling, and improving a reduction in fuel consumption efficiency due to an increased weight of the ship.

The tank unit 100 has a configuration that may store cryogenic liquefied gas L, such as liquefied natural gas (LNG) or liquefied petroleum gas (LPG), and may be generally provided by being coupled to a hull 2 of a ship or the like.

Here, when the liquefied gas L is stored, a heat insulating material may be coupled to an outer surface of the tank unit 100 to ensure the heat insulation of the liquefied gas L.

In addition, the tank unit 100 may include a support member 110 provided therein in order to store internal high-pressure liquefied gas L, and the support member 110 may be provided in a ring shape in the circumferential direction of the tank unit 100. For example, the support member 110 may be provided in the form of a disk having a hole in the middle.

The pump unit 200 serves to transmit the liquefied gas L fuel inside the tank unit 100 to the outside.

However, in order for the pump unit 200 to transmit the liquefied gas L fuel to the outside, the inlet pipe 210 of the pump unit 200 needs to be immersed in the liquefied gas L. Conventionally, when the sloshing phenomenon occurs, there is a problem in which the inlet pipe 210 is not immersed in the liquefied gas L fuel, and thus, is exposed to a gas space of the liquefied gas storage tank 1 according to the present invention, by providing the inner box unit 300, it is possible to improve this problem.

In addition, the liquefied gas L is located in the lower wall portion 340 by gravity, and the inlet pipe 210 may be provided on the lower wall portion 340 to be more easily immersed in the liquefied gas L.

In addition, the pump unit 200 may also include the supply pipe part 220 for supplying the liquefied gas L into the tank unit 100 from the outside. The supply pipe part 220 may be connected to an upper portion of the tank unit 100, or may be connected to a lower portion of the tank unit 100 in the same manner as the inlet pipe 210.

The inner box unit 300 serves to fill the periphery of the inlet pipe 210 with the liquefied gas L fuel. To this end, the inner box unit 300 is provided in the form of a container surrounding the periphery of the inlet pipe 210, and includes the backflow prevention unit 310 through which the liquefied gas L is introduced but not discharged.

As an example of the backflow prevention unit 310, there may be a flip-type first flip door 311 that is opened only in one-way.

That is, the backflow prevention unit 310 of the liquefied gas storage tank 1 according to the embodiment of the present invention is provided in the inner box unit 300, but may include the first flip door 311 that is provided to be opened and closed only in one direction.

In other words, the first flip door 311 closes an opened area of the inner box unit 300, but may be configured to move the liquefied gas L to be opened in an inflow direction.

Specifically, in the first flip door 311 of the liquefied gas storage tank 1 according to the embodiment of the present invention, one end portion of the first flip door 311 may be hinged to one side of an opening of the inner box unit 300 and the other end portion thereof may be provided to extend so as to be caught on an inner surface of the inner box unit 300, and the first flip door 311 may move in close contact with the inner box unit 300 due to elasticity.

That is, when the first flip door 311 is pushed in order to move the liquefied gas L from the inside of the inner box unit 300 to the outside, the first flip door 311 moves to close the opened area of the inner box unit 300, and is no longer actuated to be opened by pivoting outward, whereas, when the first flip door 311 is pushed to the inside of the inner box unit 300 in order to move the liquefied gas L from the outside of the inner box unit 300 to the inside, the first flip door 311 is actuated to be opened by pivoting.

In this case, one end portion of the first flip door 311, which is hinged to the inner box unit 300, may be provided with a spring member or the like whose elastic force is applied to the outside.

Here, at least one first flip door 311 of the liquefied gas storage tank 1 according to the embodiment of the present invention may be provided on the upper wall portion 320 or the side wall portion 330 of the inner box unit 300.

In other words, the opening through which the liquefied gas L is introduced into the inner box unit 300 may be formed not only in the upper wall portion 320 of the inner box unit 300 but also in the side wall portion 330 of the inner box unit 300, and the number of openings may be singular or plural. As described above, the first flip door 311 may be installed in the opening formed in at least one of the upper wall portion 320 and the side wall portion 330 so that the liquefied gas L is accommodated only in the inner box unit 300.

In addition, the inner box unit 300 is configured to close the periphery of the inlet pipe 210 in the state in which the first flip door 311 is closed. In this case, when the liquefied gas L inside the inner box unit 300 is vaporized due to a rise in temperature, etc., the liquefied gas is vaporized in the closed area, and thus, may not be vaporized more than a certain amount. Accordingly, it is possible to improve the vaporization problem of the liquefied gas L.

In addition, the inner box unit 300 of the liquefied gas storage tank 1 according to the embodiment of the present invention may share at least one side wall portion 330 with the support member provided in the tank unit 100.

Accordingly, it is possible to improve the problem in which the weight of the liquefied gas storage tank 1 increases as the inner box unit 300 is provided.

In addition, since the inner box unit 300 is provided integrally with the support member coupled to the tank unit 100, it is possible to further increase a coupling force of the inner box unit 300.

Here, the inner box unit 300 of the liquefied gas storage tank 1 according to the embodiment of the present invention may be provided so that the side wall portion 330 coupled between the support members extends upwardly from the upper wall portion 320.

That is, the remaining side wall portion 330 further provided in addition to the side wall portion 330 replaced with the support member may be configured to include an extension further extending upwardly from the upper wall portion 320.

As a result, even when the liquefied gas L inside the tank unit 100 flows by swinging, etc., the periphery of the inner box unit 300 serves as a breakwater member so as to not be affected by the flow of the liquefied gas L.

Accordingly, it is possible to stably introduce the liquefied gas L into the inner box unit 300.

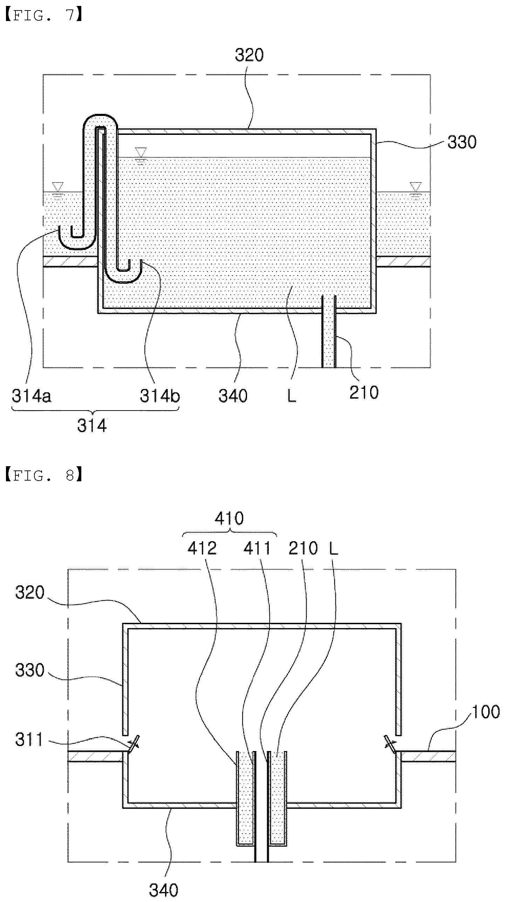

FIG. 7 is a front view illustrating an embodiment in which a difference pressure pipe 314 is provided in the inner box unit 300 of the liquefied gas storage tank 1 of the present invention. Referring to FIG. 7, the backflow prevention unit 310 of the liquefied gas storage tank 1 according to the embodiment of the present invention may include a differential pressure inlet end portion 314a extending to the outside of the inner box unit 300 and the difference pressure pipe 314 that extends into the inner box unit 300 and is provided with a differential pressure outlet end portion 314b disposed at a lower height than the differential pressure inlet end portion 314a.

In this way, the backflow prevention unit 310 is provided with the difference pressure pipe 314, so the liquefied gas L may be introduced into the inner box unit 300 and is not discharged.

That is, as the inner box unit 300 is provided to surround the periphery of the inlet pipe 210 and accommodates the liquefied gas L therein in one-way, even if the liquefied gas L fuel is biased to one side due to the inclination of the tank unit 100, the periphery of the inlet pipe 210 may be filled with the liquefied gas L fuel.

The difference pressure pipe 314 may move the liquefied gas L to the inner box unit 300 by the pressure difference due to the differential pressure outlet end portion 314b disposed inside the inner box unit 300 being lower than the differential pressure inlet end portion 314a disposed outside the inner box unit 300.

That is, a height of a central portion of the difference pressure pipe 314 is not considered and only the height of both end portions of the difference pressure pipe 314 determines the flow direction of the liquefied gas L. Since the differential pressure inlet end portion 314a is higher than the differential pressure outlet end portion 314b, the liquefied gas L flows from the differential pressure inlet end portion 314a to the differential pressure outlet end portion 314b.

In addition, the backflow prevention unit 310 of the liquefied gas storage tank 1 according to the embodiment of the present invention may include an extended inlet end portion that is disposed to face the outside of the inner box unit 300 and provided with the first flip door 311 and an extended pipe that is provided with an extension outlet end portion extending into the inner box unit 300.

That is, since the first flip door 311 is provided at the extended inlet end portion of the extended pipe, the extended pipe may be configured to make the liquefied gas L flow into the inner box unit 300, but prevent the liquefied gas L from escaping to the outside thereof.

In addition, since the extended pipe extends into the inner box unit 300, it is possible to increase the number of paths along which the liquefied gas L accommodated in the inner box unit 300 moves from the extension outlet end portion to the extended inlet end portion. Accordingly, it is possible to more effectively prevent the problem in which the liquefied gas L inside the inner box unit 300 escapes to the outside through the first flip door 311.

Here, the extended pipe of the liquefied gas storage tank 1 according to the embodiment of the present invention may be formed in the form of a curved pipe in which the extended pipe is disposed in a central portion to be lower than the extended inlet end portion, and is disposed higher than the extension outlet end portion.

That is, when the extended pipe has the form of the curved pipe instead of a straight shape, since the moving path of the liquefied gas L may further increase, it is possible to more effectively prevent the liquefied gas L from escaping.

In addition, the backflow prevention unit 310 of the liquefied gas storage tank 1 according to the embodiment of the present invention may include an inclined pipe that is disposed on the side wall portion 330 of the inner box unit 300 and provided in the form of a fallopian tube communicating with the outside and has the first flip door 311 provided at the inner end portion thereof.

That is, since the inclined pipe has the first flip door 311 provided at the extended inlet end portion thereof, the inclined pipe may be configured to make the liquefied gas L flow into the inner box unit 300, but prevent the liquefied gas L from escaping to the outside thereof.

In addition, the inclined pipe is configured to have a width increasing from the inner end portion toward the outer end portion. In this way, since the liquefied gas L accommodated in the inner box unit 300 needs to pass through a relatively narrow area when escaping to the outside, it is possible to increase the effect of preventing the liquefied gas L from escaping to the outside, and when accommodating the liquefied gas L from the outside of the inner box unit 300 to the inside of the inner box unit 300, since the liquefied gas L only needs to pass through a relatively wide area, there is an effect of accommodating the liquefied gas L more easily.

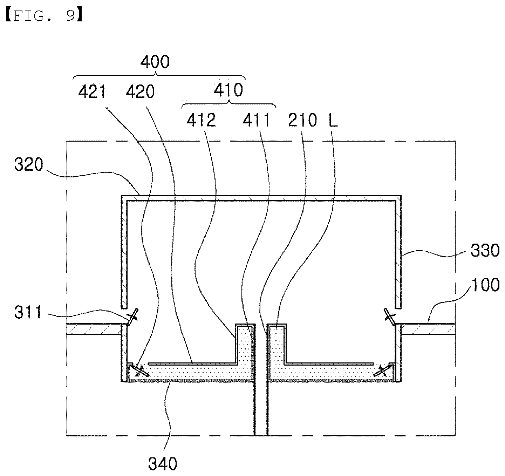

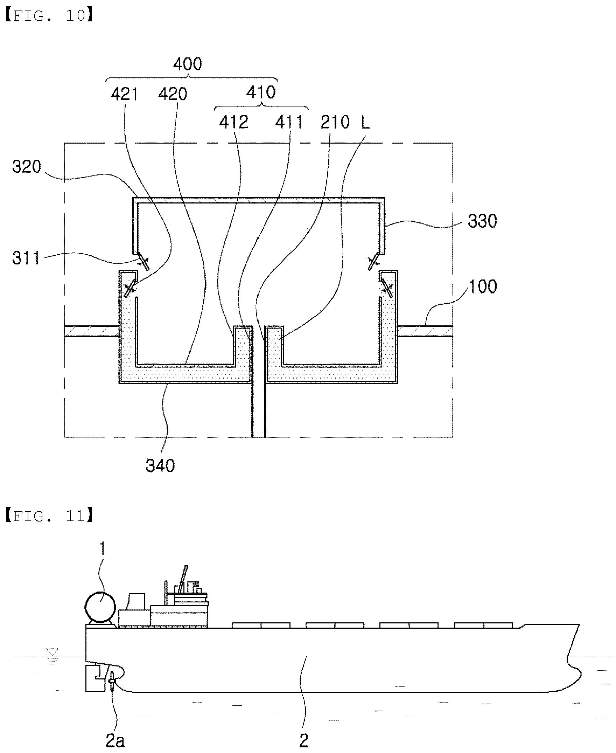

FIG. 8 is a front view illustrating an embodiment in which the cryogenic unit 400 is provided in the liquefied gas storage tank 1 of the present invention, FIG. 9 is a front view illustrating an embodiment in which the cryogenic unit 400 extends to the lower wall portion 340 in the liquefied gas storage tank 1 of the present invention, and FIG. 10 is a front view illustrating an embodiment in which the cryogenic unit 400 extends to the lower wall portion 340 and the side wall portion 330 in the liquefied gas storage tank 1 of the present invention.

Referring to the drawings, the cryogenic unit 400 may be provided to be in contact with at least the inlet pipe 210 of the liquefied gas storage tank 1 according to the embodiment of the present invention, and to have the liquefied gas L contained therein.

That is, the liquefied gas storage tank 1 of the present invention may maintain the inlet pipe 210 at a low temperature by including the cryogenic unit 400, so it is possible to prevent the problem in which the liquefied gas L moving through the inlet pipe 210 is vaporized due to the rise in temperature.

In other words, even if the periphery of the inlet pipe 210 may be filled with the liquefied gas L by the inner box unit 300, when the liquefied gas L accommodated in the inner box unit 300 is discharged to the outside through the inlet pipe 210, a relatively high-temperature gas region may also be formed around the inlet pipe 210. In this case, since there may be the problem in which the liquefied gas L moving through the inlet pipe 210 is vaporized, the cryogenic unit 400 is provided.

Specifically, the cryogenic unit 400 of the liquefied gas storage tank 1 according to the embodiment of the present invention may include an insertion cylinder part 410 that is provided with the inlet pipe 210 to pass therethrough so that the inside of the inner box unit 300 communicates with the inlet pipe 210 and is formed in a cylinder shape in contact with the inlet pipe 210.

In other words, the cryogenic unit 400 includes the insertion cylinder part 410 that is in contact with the periphery of the inlet pipe 210 but has a relatively low-temperature liquefied gas L accommodated therein.

As an example, the liquefied gas L may be liquefied natural gas (LNG), liquefied propane gas (LPG), or the like. Since, for the liquefied natural gas, a boiling point is about -162°C, and for the liquefied propane gas, a boiling point is about -50°C, the temperature of the inlet pipe 210 may be maintained at about -162°C and about -50°C, respectively.

To this end, the insertion cylinder part 410 may include an inner pipe part 411 and an exterior part 412. The insertion cylinder part 410 of the liquefied gas storage tank 1 according to the embodiment of the present invention may include the inner pipe part 411 that is in contact with the inlet pipe 210 and the exterior part 412 that is spaced apart from the inner pipe part 411 at a predetermined interval to accommodate the liquefied gas L, and has a lower end portion coupled to the inner pipe part 411.

Here, the inlet pipe 210 may be inserted into and in contact with the inner pipe part 411, and a space may be formed between the inner pipe part 411 and the outer part 412 to accommodate the liquefied gas L.

That is, the inner pipe part 411 and the exterior part 412 have a double pipe structure, and the lower end portions thereof are coupled to each other to have a structure that may accommodate the liquefied gas L without escaping.

In addition, the insertion cylinder part 410 of the liquefied gas storage tank 1 according to the embodiment of the present invention may be the form in that the upper end portion is opened.

In the case of this embodiment, it is possible to accommodate the liquefied gas L without providing the first flip door 311 or the like in the upper end portion of the insertion cylinder part 410.

However, when the first flip door 311 for moving the liquefied gas L only in one-way is provided on the upper end portion of the insertion cylinder, the first flip door 311 may be provided.

The cryogenic unit 400 of the liquefied gas storage tank 1 according to the embodiment of the present invention may include a double wall portion 420 provided with a second flip door 421 that communicates with the lower end portion of the insertion cylinder part 410, extends to the lower wall portion 340 of the inner box unit 300 or the lower wall portion 340 and the side wall portion 330 of the inner box unit 300, and is opened and closed only in one direction so that the liquefied gas L is introduced into the second flip door 421.

In addition to forming the inlet pipe 210 in a low-temperature environment, the double wall portion 420 has an effect of forming the outer portion of the inner box unit 300 in the low-temperature environment.

As a result, it is possible to improve the problem in which the liquefied gas L accommodated in the inner box unit 300 is exposed to the high temperature environment and vaporized.

In other words, the double wall portion 420 may be provided in the lower wall portion 340 of the inner box unit 300, and may be formed in an "L" shape when viewed from a front cross-sectional view. For this, reference may be made to FIG. 9.

According to this, in addition to being able to dispose the liquefied gas L in order to maintain the inlet pipe 210 in the low-temperature environment by the insertion cylinder part 410, in order to maintain the lower wall portion 340 of the inner box unit 300 in the low-temperature environment, the liquefied gas L may be disposed.

In addition, the double wall portion 420 may be provided in the lower wall portion 340 and the side wall portion 330 of the inner box unit 300, and may be formed in a "U" shape when viewed from a front cross-sectional view. For this, reference may be made to FIG. 10.

According to this, in addition to being able to dispose the liquefied gas L in order to maintain the inlet pipe 210 in the low-temperature environment by the insertion cylinder part 410, in order to maintain the lower wall portion 340 and the side wall portion 330 of the inner box unit 300 in the low-temperature environment, the liquefied gas L may be disposed.

Here, in order to accommodate the liquefied gas L in the double wall portion 420, the double wall portion 420 may be a double plate having a space formed therein, and may communicate with the space between the exterior part 412 of the insertion cylinder part 410 and the inner pipe part 411.

In order to accommodate the liquefied gas L into the double wall portion 420, the second flip door 421 is provided on the upper surface portion, and may be configured to accommodate the liquefied gas L into the double wall portion 420, but prevent the liquefied gas L from moving to the outside.

FIG. 11 is a side view illustrating the liquefied gas storage tank 1 of the present invention and the ship having the same. Referring to FIG. 11, a ship according to another embodiment of the present invention may include a hull 2 that includes the liquefied gas storage tank 1 and an engine unit 2a provided with the liquefied gas storage tank 1 and providing driving force.

That is, by including the above-described liquefied gas storage tank 1 in the ship, the water level of the liquefied gas L fuel is lowered as the liquefied gas L fuel is used in the tank unit 100, or even if the liquefied gas L fuel is biased to one side due to the inclination of the liquefied gas storage tank 1 due to the sloshing of the vessel, it is possible to fill the periphery of the inlet pipe 210 with the liquefied gas L fuel.

In addition, by maintaining the periphery of the inlet pipe 210 in the low-temperature environment, it is possible to prevent the liquefied gas L moving through the inlet pipe 210 from being vaporized.

As a result, it is possible to prevent the problem in which the failure is caused due to the introduction of gas into the configuration of the engine or the like to which the liquefied gas L fuel is to be supplied, thereby preventing the problem in which the engine unit 2a is stopped during the movement of the ship, and it is possible to utilize the capacity of the liquefied gas storage tank 1 to the maximum, thereby increasing the travel distance, preventing the time loss due to frequent refueling, and improving the reduction in fuel consumption efficiency due to the increased weight of the ship.

While exemplary embodiments have been shown and described above, it will be apparent to those skilled in the art that modifications and variations could be made without departing from the scope of the appended claims.

## Claims

1. A liquefied gas storage tank (1), comprising: a tank unit (100) in which liquefied gas is stored; an inner box unit (300) that is disposed inside the tank unit (100) and installed at a bottom portion of the tank unit; and a pump unit (200) that has an inlet pipe part (210) formed to pass through a lower wall portion of the inner box unit (300) and communicate with the inside of the inner box unit, and suctions the liquefied gas stored in the tank unit (100) through the inlet pipe part (210) and supplies the liquefied gas to the outside, wherein the inner box unit (300) is formed to be depressed downwardly from the bottom portion of the tank unit, and the lower wall portion of the inner box unit (300) is formed at a lower height than the bottom portion of the tank unit, wherein the inner box unit (300) is provided in the form of a container surrounding the periphery of the inlet pipe (210).

2. The liquefied gas storage tank (1) of claim 1,
wherein the inner box unit (300) includes a backflow prevention unit provided so that the liquefied gas is introduced but not discharged.

3. The liquefied gas storage tank (1) of claim 2, wherein the backflow prevention unit includes a first flip door provided in the inner box unit (300) opened and closed only in one direction.

4. The liquefied gas storage tank (1) of claim 3, wherein at least one first flip door is provided on an upper wall portion or a side wall portion of the inner box unit.

5. The liquefied gas storage tank (1) of claim 3, wherein one end portion of the first flip door is hinged to one side of an opening of the inner box unit, and the other end portion thereof is provided to extend so as to be caught on an inner surface of the inner box unit, and the first flip door moves in close contact with the inner box unit (300) by elasticity.

6. The liquefied gas storage tank (1) of claim 2, wherein the backflow prevention unit includes a difference pressure pipe having a differential pressure inlet end portion that extends outwardly of the inner box unit (300) and a differential pressure outlet end portion that extends into the inner box unit (300) and is disposed at a height lower than the differential pressure inlet end portion.

7. The liquefied gas storage tank (1) of claim 1, further comprising: a cryogenic unit that is provided to be in contact with at least the inlet pipe (210), and has the liquefied gas contained therein.

8. The liquefied gas storage tank (1) of claim 7, wherein the cryogenic unit includes an insertion cylinder part that is provided to pass through the inlet pipe (210) so that the inside of the inner box unit (300) communicates with the inlet pipe (210) and formed in a cylindrical shape in contact with the inlet pipe (210).

9. The liquefied gas storage tank (1) of claim 8, wherein the insertion cylinder part includes: an inner pipe part that is in contact with the inlet pipe (210) ; and an exterior part that is spaced apart from the inner pipe part at a predetermined interval to accommodate the liquefied gas and has a lower end portion coupled to the inner pipe part.

10. The liquefied gas storage tank (1) of claim 8, wherein the insertion cylinder part has an opened upper end portion.

11. The liquefied gas storage tank (1) of claim 8, wherein the cryogenic unit includes a double wall portion provided with a second flip door that communicates with a lower end portion of the insertion cylinder, extends to a lower wall portion of the inner box unit (300) or the lower wall portion and a side wall portion of the inner box unit, and is opened and closed only in one direction so that the liquefied gas is introduced into the second flip door.

12. A ship, comprising: the liquefied gas storage tank (1) of any one of claims 1 to 11; and a hull that is provided with a liquefied gas storage tank (1), and includes an engine unit providing driving force.

## Patentansprüche

1. Flüssiggasspeichertank (1), umfassend:
eine Tankeinheit (100), in der Flüssiggas gespeichert ist; eine innere Kasteneinheit (300), die im Inneren der Tankeinheit (100) angeordnet und an einem Bodenabschnitt der Tankeinheit installiert ist; und eine Pumpeneinheit (200), die ein Einlassrohrteil (210) aufweist, das derart ausgebildet ist, dass es durch einen unteren Wandabschnitt der inneren Kasteneinheit (300) verläuft und mit dem Inneren der inneren Kasteneinheit in Verbindung steht, und das Flüssiggas, das in der Tankeinheit (100) gespeichert ist, durch das Einlassrohrteil (210) ansaugt und das Flüssiggas nach außen führt, wobei die innere Kasteneinheit (300) derart ausgebildet ist, dass sie von dem Bodenabschnitt der Tankeinheit nach unten gedrückt wird, und der untere Wandabschnitt der inneren Kasteneinheit (300) auf einer niedrigeren Höhe als der Bodenabschnitt der Tankeinheit ausgebildet ist, wobei die innere Kasteneinheit (300) in Form eines Behälters bereitgestellt ist, der den Umfang des Einlassrohrs (210) umgibt.

2. Flüssiggasspeichertank (1) nach Anspruch 1, wobei die innere Kasteneinheit (300) eine Rückflussverhinderungseinheit beinhaltet, die bereitgestellt ist, so dass das Flüssiggas eingeleitet, aber nicht abgelassen wird.

3. Flüssiggasspeichertank (1) nach Anspruch 2, wobei die Rückflussverhinderungseinheit eine erste Klapptür beinhaltet, die in der inneren Kasteneinheit (300) bereitgestellt ist, die nur in eine Richtung geöffnet und geschlossen wird.

4. Flüssiggasspeichertank (1) nach Anspruch 3, wobei mindestens eine erste Klapptür an einem oberen Wandabschnitt oder einem Seitenwandabschnitt der inneren Kasteneinheit bereitgestellt ist.

5. Flüssiggasspeichertank (1) nach Anspruch 3, wobei ein Endabschnitt der ersten Klapptür an einer Seite einer Öffnung der inneren Kasteneinheit angelenkt ist und der andere Endabschnitt davon bereitgestellt ist, um sich zu erstrecken, um an einer Innenfläche der inneren Kasteneinheit hängen zu bleiben, und sich die erste Klapptür durch Elastizität in engem Kontakt mit der inneren Kasteneinheit (300) bewegt.

6. Flüssiggasspeichertank (1) nach Anspruch 2, wobei die Rückflussverhinderungseinheit ein Differenzdruckrohr beinhaltet, das einen Differenzdruckeinlassendabschnitt, der sich nach außen von der inneren Kasteneinheit (300) erstreckt, und einen Differenzdruckauslassendabschnitt, der sich in die innere Kasteneinheit (300) erstreckt und in einer Höhe angeordnet ist, die niedriger als der Differenzdruckeinlassendabschnitt ist, aufweist.

7. Flüssiggasspeichertank (1) nach Anspruch 1, ferner umfassend: eine kryogene Einheit, die bereitgestellt ist, um in Kontakt mit mindestens dem Einlassrohr (210) zu stehen, und das darin enthaltene Flüssiggas aufweist.

8. Flüssiggasspeichertank (1) nach Anspruch 7, wobei die kryogene Einheit ein Einsetzzylinderteil beinhaltet, das bereitgestellt ist, um durch das Einlassrohr (210) zu verlaufen, so dass das Innere der inneren Kasteneinheit (300) mit dem Einlassrohr (210) in Verbindung steht, und in einer zylindrischen Form in Kontakt mit dem Einlassrohr (210) ausgebildet ist.

9. Flüssiggasspeichertank (1) nach Anspruch 8, wobei das Einsetzzylinderteil Folgendes beinhaltet: ein Innenrohrteil, das mit dem Einlassrohr (210) in Kontakt steht; und ein Außenteil, das von dem Innenrohrteil in einem vorbestimmten Intervall beabstandet ist, um das Flüssiggas aufzunehmen, und einen unteren Endabschnitt aufweist, der an das Innenrohrteil gekoppelt ist.

10. Flüssiggasspeichertank (1) nach Anspruch 8, wobei das Einsetzzylinderteil einen geöffneten oberen Endabschnitt aufweist.

11. Flüssiggasspeichertank (1) nach Anspruch 8, wobei die kryogene Einheit einen Doppelwandabschnitt beinhaltet, der mit einer zweiten Klapptür bereitgestellt ist, die mit einem unteren Endabschnitt des Einsetzzylinders in Verbindung steht, sich zu einem unteren Wandabschnitt der inneren Kasteneinheit (300) oder dem unteren Wandabschnitt und einem Seitenwandabschnitt der inneren Kasteneinheit erstreckt und nur in eine Richtung geöffnet und geschlossen wird, so dass das Flüssiggas in die zweite Klapptür eingeleitet wird.

12. Schiff, umfassend: den Flüssiggasspeichertank (1) nach einem der Ansprüche 1 bis 11; und einen Rumpf, der mit einem Flüssiggasspeichertank (1) bereitgestellt ist und eine Motoreinheit beinhaltet, die Antriebskraft bereitstellt.

## Revendications

1. Réservoir de stockage de gaz liquéfié (1), comprenant : une unité de réservoir (100) dans laquelle du gaz liquéfié est stocké ; une unité de boîte interne (300) qui est disposée à l'intérieur de l'unité de réservoir (100) et installée au niveau d'une portion basse de l'unité de réservoir ; et une unité de pompage (200) qui comporte une partie de tuyau d'entrée (210) formée pour passer à travers une portion de paroi inférieure de l'unité de boîte interne (300) et communiquer avec l'intérieur de l'unité de boîte interne, et aspire le gaz liquéfié stocké dans l'unité de réservoir (100) à travers la partie de tuyau d'entrée (210) et fournit le gaz liquéfié à l'extérieur, dans lequel l'unité de boîte interne (300) est formée pour être enfoncée vers le bas à partir de la portion basse de l'unité de réservoir, et la portion de paroi inférieure de l'unité de boîte interne (300) est formée à une hauteur inférieure à la portion basse de l'unité de réservoir, dans lequel l'unité de boîte interne (300) est prévue sous la forme d'un contenant entourant la périphérie du tuyau d'entrée (210).

2. Réservoir de stockage de gaz liquéfié (1) selon la revendication 1,
dans lequel l'unité de boîte interne (300) inclut une unité de prévention de reflux prévue de sorte que le gaz liquéfié est introduit mais non évacué.

3. Réservoir de stockage de gaz liquéfié (1) selon la revendication 2, dans lequel l'unité de prévention de reflux inclut une première porte rabattable prévue dans l'unité de boîte interne (300) ouverte et fermée dans une seule direction.

4. Réservoir de stockage de gaz liquéfié (1) selon la revendication 3, dans lequel au moins une première porte rabattable est prévue sur une portion de paroi supérieure ou une portion de paroi latérale de l'unité de boîte interne.

5. Réservoir de stockage de gaz liquéfié (1) selon la revendication 3, dans lequel une portion d'extrémité de la première porte rabattable est articulée sur un côté d'une ouverture de l'unité de boîte interne, et l'autre portion d'extrémité de celle-ci est prévue pour s'étendre de façon à être accrochée sur une surface interne de l'unité de boîte interne, et la première porte rabattable se met en mouvement en contact étroit avec l'unité de boîte interne (300) par élasticité.

6. Réservoir de stockage de gaz liquéfié (1) selon la revendication 2, dans lequel l'unité de prévention du reflux inclut un tuyau de pression différentielle ayant une portion d'extrémité d'entrée de pression différentielle qui s'étend vers l'extérieur de l'unité de boîte interne (300) et une portion d'extrémité de sortie de pression différentielle qui s'étend dans l'unité de boîte interne (300) et est disposée à une hauteur inférieure à la portion d'extrémité d'entrée de pression différentielle.

7. Réservoir de stockage de gaz liquéfié (1) selon la revendication 1, comprenant en outre : une unité cryogénique qui est prévue pour être en contact avec au moins le tuyau d'entrée (210), et qui contient le gaz liquéfié.

8. Réservoir de stockage de gaz liquéfié (1) selon la revendication 7, dans lequel l'unité cryogénique inclut une partie de cylindre d'insertion qui est prévue pour passer à travers le tuyau d'entrée (210) de sorte que l'intérieur de l'unité de boîte interne (300) communique avec le tuyau d'entrée (210) et est formée en une forme cylindrique en contact avec le tuyau d'entrée (210).

9. Réservoir de stockage de gaz liquéfié (1) selon la revendication 8, dans lequel la partie de cylindre d'insertion inclut : une partie de tuyau interne qui est en contact avec le tuyau d'entrée (210) ; et une partie externe qui est espacée de la partie de tuyau interne à un intervalle prédéterminé pour recevoir le gaz liquéfié et qui a une portion d'extrémité inférieure couplée à la partie de tuyau interne.

10. Réservoir de stockage de gaz liquéfié (1) selon la revendication 8, dans lequel la partie de cylindre d'insertion a une portion d'extrémité supérieure ouverte.

11. Réservoir de stockage de gaz liquéfié (1) selon la revendication 8, dans lequel l'unité cryogénique inclut une portion à double paroi munie d'une seconde porte rabattable qui communique avec une portion d'extrémité inférieure du cylindre d'insertion, s'étend jusqu'à une portion de paroi inférieure de l'unité de boîte interne (300) ou la portion de paroi inférieure et une portion de paroi latérale de l'unité de boîte interne, et est ouverte et fermée dans une seule direction de sorte que le gaz liquéfié est introduit dans la seconde porte rabattable.

12. Navire, comprenant : le réservoir de stockage de gaz liquéfié (1) selon l'une quelconque des revendications 1 à 11 ; et une coque qui est munie d'un réservoir de stockage de gaz liquéfié (1), et inclut une unité de moteur produisant une force motrice.
